# EUROPEAN PATENT SPECIFICATION

(11) **EP 4 431 308 B1**
(45) Date of publication and mention of the grant of the patent: **04.11.2026**
(21) Application number: 24163562.2
(22) Date of filing: 14.03.2024
(51) Int. Cl.: B60C 9/14, B60C 15/06, B60C 9/18, B60C 13/04

(54) **PNEUMATIC TIRE WITH SIDEWALL GUM LAYER**
LUFTREIFEN MIT SEITENWANDGUMMISCHICHT
PNEUMATIQUE AVEC COUCHE DE GOMME DE FLANC

(30) Priority: 15.03.2023 US 202363490373 P; 30.01.2024 US 202418426476; 30.01.2024 US 202418426577
(43) Date of publication of application: 18.09.2024
(73) Proprietor: The Goodyear Tire & Rubber Company, Akron, OH 44316 (US)
(72) Inventor: REICHLING, Gilles, L-9189 Vichten (LU); ZOTZ, Bernd, D-63450 Hanau (DE); MULLER, Philippe Joseph Auguste, B-6971 Champlon (BE); FROGER, Nicolas Claude Jean-Claude, F-54860 Haucourt-Moulaine (FR); FOSAM, Richard, L-7462 Moesdorf (LU); BARAN, Wojciech Franciszek, L-9045 Ettelbruck (LU); WIETOR, Patrick, D-54439 Palzem (DE)
(74) Representative: Leslie, Edward

(56) References cited:
- EP-A1- 3 878 667
- DE-A1- 102014 207 193
- US-A1- 2013 098 518
- US-A1- 2015 283 864
- US-A1- 2019 193 485

## Description

### FIELD OF THE INVENTION

The invention relates generally to tires and, more particularly, to pneumatic tires with improved durability.

### BACKGROUND OF THE INVENTION

A pneumatic tire typically includes a pair of axially separated inextensible beads having at least one carcass ply extending between the two beads. The carcass ply includes axially opposite end portions each of which can be turned up around a respective bead and secured thereto. Tread rubber and sidewall rubber are located axially from and radially outward of, respectively, the carcass ply.

During operation, the rubber of the tire sidewall deforms, which creates heat and accelerates wear of the sidewall. To restrict deformations, the thickness of rubber of the tire side portion can be increased. However, the associated increased weight can increase the rolling resistance of the tire, which reduces tire performance and fuel economy as well as increases wear in other locations of the tire. Therefore, solutions to reduce the heat generation or accumulation at the sidewall with minimal increase in overall tire weight is desired.

US 2013/098518 A1, US 2015/283864 A1 and DE 10 2014 207 193 A1 describe a tire in accordance with the preamble of claim 1.

EP 3 878 667 A1 and US 2019/193485 A1 describe tires having a sidewall gum layer with one end of the respective layer being located radially inward of a bead apex.

### SUMMARY OF THE INVENTION

The invention relates to a tire in accordance with claim 1.

Dependent claims refer to preferred embodiments of the invention.

The invention provides in a first preferred aspect a tire comprising first and second annular bead cores axially spaced from one another and a carcass including at least one ply wrapped around the first and second bead cores, each ply of the at least one ply defining a pair of turned up ends extending from the bead cores to outer end points of each ply. First and second bead regions are wrapped by the at least one ply such that the first and second bead regions are bounded laterally by the at least one ply and the turned up ends, and bounded radially by radially innermost edges of respective annular bead cores and radially outermost end points of respective turned up ends. A belt structure is disposed radially outward of the carcass, the belt structure including a radially innermost belt having first and second lateral end portions terminating in respective first and second lateral edges of the radially innermost belt respectively. First and second sidewall gum layers extend along a surface of the at least one ply from a first end to a second end, the first end disposed axially inward of a respective lateral edge of the radially innermost belt and radially between the at least one ply and a respective lateral end portion of the radially innermost belt, the second end disposed within a respective bead region of the first and second bead regions.

Also disclosed is a tire comprising a tread cap, a carcass, a belt structure, a pair of sidewall portions, a pair of bead regions and a pair of sidewall gum layers. The carcass comprises at least one ply wrapped around first and second axially spaced bead cores, each ply of the at least one ply defining a pair of turned up ends extending from the bead cores to outer end points of each ply. The belt structure is interposed between the carcass and the tread cap. The belt structure comprises a radially innermost belt terminating at opposed first and second lateral edges. Radially outermost portions of each sidewall portion overlie lateral end portions of the tread cap. The pair of bead regions each include an annular bead core of the first and second bead cores, wherein the carcass wraps around the pair of bead regions such that the regions are bounded laterally by the at least one ply and the turned up ends, and bounded radially by radially innermost edges of the respective annular bead cores and radially outermost end points of respective turned up ends. A first sidewall gum layer extends along a surface of the at least one ply from a first end axially inward of the first lateral edge of the radially innermost belt to a second end within a first bead region of the pair of bead regions, and a second sidewall gum layer extends along the surface of the at least one ply from a first end axially inward of the second lateral edge of the first belt to a second end within a second bead region of the pair of bead regions.

According to another preferred aspect, the invention is directed to a tire comprising a carcass that comprises at least one ply wrapped around first and second axially spaced bead cores. Each ply of the at least one ply defines a pair of turned up ends extending from the bead cores to outer end points of each ply. A belt structure is disposed radially outward of the carcass. The belt structure comprises a radially innermost belt having two lateral end portions. The tier further includes a pair of bead regions, wherein the at least one ply wraps around the pair of bead regions such that the regions are bounded laterally by the at least one ply and the turned up ends, and bounded radially by radially innermost edges of the respective annular bead cores and radially outermost end points of respective turned up ends. The tire further includes a pair of sidewall portions, wherein each of the sidewall portions is disposed axially outward of one of the pair of bead regions. The tire further includes a pair of sidewall gum layers, wherein a first sidewall gum layer is disposed axially between a first sidewall portion of the pair of sidewall portions and extends along a surface of the at least one ply from a first end between the at least one ply and the first lateral end portion of the radially innermost belt to a second end within a first bead region of the pair of bead regions, and wherein a second sidewall gum layer is disposed axially between a second sidewall portion of the pair of sidewall portions and extends along the surface of the at least one ply from a first end between the at least one ply and the second lateral end portion of the radially innermost belt to a second end within a second bead region of the pair of bead regions.

### DEFINITIONS

The following definitions are applicable to the present invention.

"Apex" means an elastomeric filler located radially above the bead core and between the one or more plies and turned up ends of the one or more plies.

"Axial" and "axially" mean lines or directions that are parallel to the axis of rotation of the tire.

"Bead core" means an annular tensile member reinforcing the bead region of a tire, commonly constructed of steel wire, cords or cables.

"Bead Region" means that part of the tire wrapped by a carcass and including a bead core. The bead region may be shaped, with or without other reinforcement elements such as flippers, chippers, apexes, toe guards, and chafers, to fit the design rim.

"Belt structure" means one or at least two annular layers or plies of parallel cords, woven or unwoven, underlying the tread, unanchored to the bead, and preferably having cords inclined with respect to the equatorial plane of the tire. The belt structure may also include plies of parallel cords inclined at relatively low angles, acting as restricting layers.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Cord" means one of the reinforcement strands of which the reinforcement structures of the tire comprise.

"Cord angle" means the acute angle, left or right in a plan view of the tire, formed by a cord with respect to the equatorial plane. The "cord angle" is measured in a cured but uninflated tire.

"Elastomer" means a resilient material capable of recovering size and shape after deformation.

"Equatorial plane (EP)" or "Equatorial Centerplane (CP) means the plane perpendicular to the axis of rotation of the tire and passing through the center of the tire tread.

"Inner" means toward the inside of the tire.

"Innerliner" means the layer or layers of elastomer or other material that form the inside surface of a tubeless tire and that contain the inflating fluid within the tire.

"Lateral" and "laterally" are used to indicate axial directions across the tread of the tire.

"Lateral edges" of the tread means a line tangent to the axially outermost tread contact patch or footprint as measured under normal load and tire inflation, the lines being parallel to the equatorial centerplane.

"Outer" means toward the outside of the tire.

"Ply" means a cord-reinforced layer of rubber; rubber-coated, radially deployed or otherwise parallel cords.

"Pneumatic Tire" means a laminated mechanical device of generally toroidal shape (usually an open-torus) having beads and a tread and made of rubber, chemicals, fabric, and steel or other materials. When mounted on the wheel of a motor vehicle, the tire through its tread provides traction and contains the fluid that sustains the vehicle load.

"Radial" and "radially" are used to mean directions radially toward or away from the axis of rotation of the tire.

"Sidewall" means that portion of a tire between the tread and the bead.

"Sidewall-over-tread" refers to a tire design and method of fabrication in which the radially outermost portions of each sidewall of a tire overlie the lateral end portions of the tread.

"Tread" means a molded rubber component which includes that portion of the tire that comes into contact with the road when the tire is normally inflated and under normal load. The tread has a depth conventionally measured from the tread outer surface to the bottom of the deepest groove of the tire.

### BRIEF DESCRIPTION OF THE DRAWINGS

The invention will be described by way of example and with reference to the accompanying drawings in which:
FIG. 1 illustrates a cross-sectional view of one half of an example tire of the present invention.
FIG. 2 is an enlarged view of the area of interest identified in FIG. 1 illustrating a first end of a sidewall gum layer in contact with a wedge that supports a lateral end portion of a belt.
FIG. 3 is a view similar to FIG. 2 illustrating the first end of the sidewall gum layer in contact with a wraparound gum layer disposed around the lateral end portion of the belt.
FIG. 4 is a view similar to FIG. 2 illustrating the first end of a sidewall gum layer in direct contact with the lateral end portion of the belt.
FIG. 5 is an enlarged view of the area of interest identified in FIG. 1 illustrating a sidewall gum layer extending to a bead filler apex within a bead region of the tire.
FIG. 6 is a view similar to FIG. 5 illustrating the sidewall gum layer extending to an opposite lateral side of the bead filler apex within a bead region.
FIG. 7 is a view similar to FIG. 5 illustrating the sidewall gum layer extending to a bead core within a bead region that does not include a bead filler apex therein.
FIG. 8 is a view similar to FIG. 5 illustrating the sidewall gum layer extending to point radially outward of bead filler apex within a bead region.

### DESCRIPTION OF PREFERRED EMBODIMENTS OF THE INVENTION

The present invention relates generally to tires and, more particularly, tires with improved durability. The tires of the present invention may be used in multiple applications, such as race tires, passenger vehicle tires, and heavy load tires. The tire is preferably a pneumatic tire.

The tires of the present invention include thin layers (e.g., 0.2 mm to 2 mm thick or 0.4 mm to 1.5 mm thick) of unreinforced extra rubber (referred to herein as gum layers) that are strategically placed to absorb and dissipate energy and heat generated when the sidewall flexes, for example, during rolling. Advantageously, the gum layers are thin and only in a portion of the tire construction, and, therefore, contribute minimal weight to the overall tire while still improving durability.

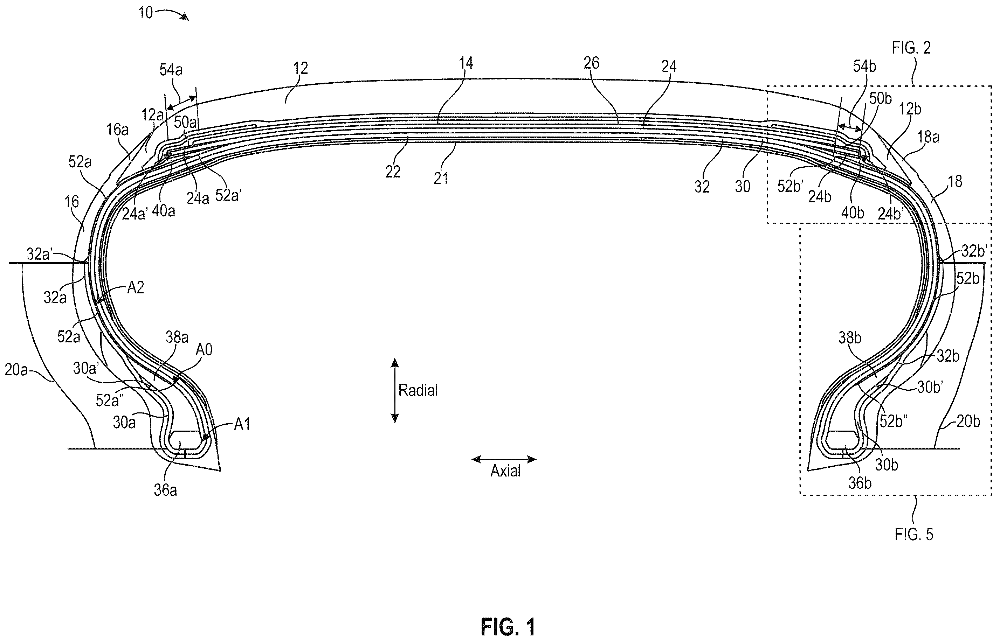

FIG. 1 illustrates a cross-sectional view of a pneumatic tire 10 according to at least some embodiments of the present invention. The tire 10 has a sidewall-over-tread (SOT) design. However, the teachings of the present invention (especially the placement, compositions, and dimensions of the wraparound gum layers and sidewall gum layers) may be applied to other tire designs include tread-over-sidewall designs.

The tire 10 includes a tread cap 12, a belt structure 14 comprising belts 24, 26, a pair of sidewall portions 16, 18, a pair of bead regions 20a, 20b, a carcass structure 22, a pair of wedges 40a, 40b, and an innerliner 21.

While the illustrated belt structure 14 includes two belts 24, 26, any number of belts (e.g., 1 to 10) may be included in a tire 10 of the present invention. In the illustrated tire 10, the first belt 24 is radially inward of the second belt 26. In tires 10 of the present invention, the first belt 24 (the radially innermost belt) of the belt structure 14 is preferably the widest belt of the belt structure 14. Preferably, the first belt 24 has a belt width substantially equal to the tread arc width. The breaker angle of first belt 24 is preferably between 12 degrees and 45 degrees, preferably with a left orientation, more preferably in the range of 19 degrees to 30 degrees. The belt angles are measured with respect to the circumferential direction.

The second belt 26 is located radially outward of the first belt 24. The second belt 26 preferably has a width in the range of 30% to 50% of the tread arc width. The second belt 26 preferably has a breaker angle between 12 degrees and 45 degrees, preferably with a right orientation, more preferably in the range of 19 degrees to 30 degrees. The second belt 26 is preferably made of the same wire as the first belt 24 and has the same construction with the same but opposite angular orientation as first belt 24.

The first and second belts 24, 26 are preferably made of steel, i.e. reinforced with steel. The % elongation at 10% of the breaking load of the first and second belts 24, 26 preferably ranges from 0.18 to 0.26. More preferably, the first and second belts 24, 26 are extensible, so that the % elongation at 10% of breaking load is greater than 0.2. The % elongation is measured on a cord extracted from a vulcanized tire.

Generally, for SOT and other designs, the sidewalls 16, 18 extend substantially outward from each of the bead regions 20a, 20b in the radial direction of the tire 10. The illustrated tire 10 is a sidewall-over-tire (SOT) design where the radially outermost portions 16a, 18a of each sidewall 16, 18 of a tire 10 overlie the lateral end portions 12a, 12b of the tread cap 12, respectively.

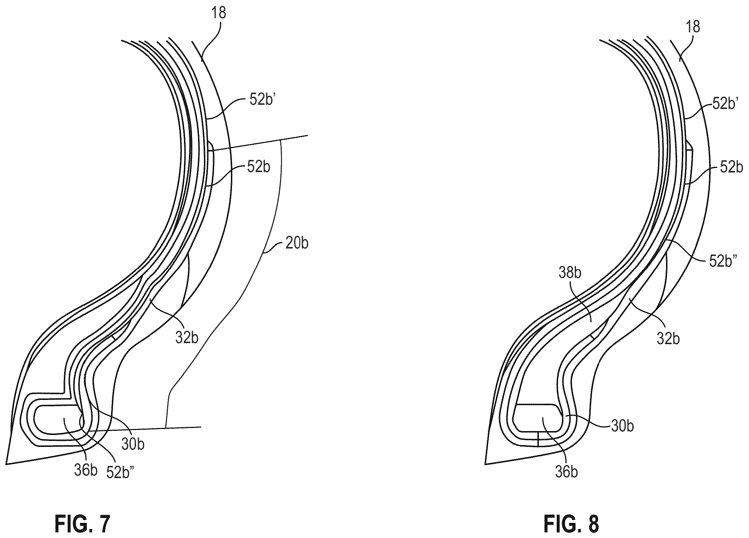

The pair of bead regions 20a, 20b include a pair of annular bead cores 36a, 36b. In some embodiments, as illustrated in FIG. 1, the bead regions 20a,20b each further include a respective bead filler apex 38a, 38b. In other embodiments (see FIG. 7), the bead regions 20a,20b may include bead cores 36a, 36b without including bead filler apexes 38a, 38b.

The carcass 22 is radially outward of the innerliner 21. The carcass 22 preferably comprises a first ply 30 and second ply 32 radially inward of the first ply 30. While the illustrated carcass 22 includes two plies 30, 32, any number of plies (e.g., 1 to 10) may be included in a tire 10 of the present invention. During the manufacturing sequence, the plies can be installed such that the portions of some or all of the plies extend into the bead region 20a, 20b are turned up around the respective bead cores 36a, 36b to create turned up ends. In the illustrated example, the first and second plies 30, 32 both include turned up ends 30a, 32a and 30b, 32b around each of the respective bead cores 36a, 36b. The turned up ends 30a, 32a extend from the bead cores 36a, 36b to outer end points 30a', 32a', 30b', 32b' of each ply 30, 32. The carcass 22 wraps around the bead regions 20a, 20b such that at least one of the plies 30, 32 extend along both inner and outer axial sides of the bead region 20a, 20b. For example, the turned up ends 32a, 32b of the second ply 32 extend along outer axial sides of the bead regions 20a, 20b and the first ply 30 extends along inner axial sides of the bead regions 20a, 20b.

On either side of the tire 10, a wedge 40a, 40b is located, at least partially, between a respective lateral end portion 24a, 24b of the first belt 24 (the radially innermost belt) and the first ply 30 (the radially outermost ply). That is, a first wedge 40a is, at least partially, between a first lateral end portion 24a of the first belt 24 (the radially innermost belt) and the first ply 30 (the radially outermost ply), and a second wedge 40b is, at least partially, between a second lateral end portion 24b of the first belt 24 and the first ply 30. Wedges 40a, 40b support the lateral end portions 24a, 24b and assist in maintaining a predetermined curvature of the first belt 24. The wedges 40a, 40b are preferably constructed of a rubber or elastomer, or any of the materials described below for the construction of the "gum layers" described herein. As illustrated, each wedge 40a, 40b extends axially outward past a respective lateral edge 24a', 24b' of the first belt 24 to be between the respective lateral end portion 12a, 12b of the tread cap 12 and the first ply 30.

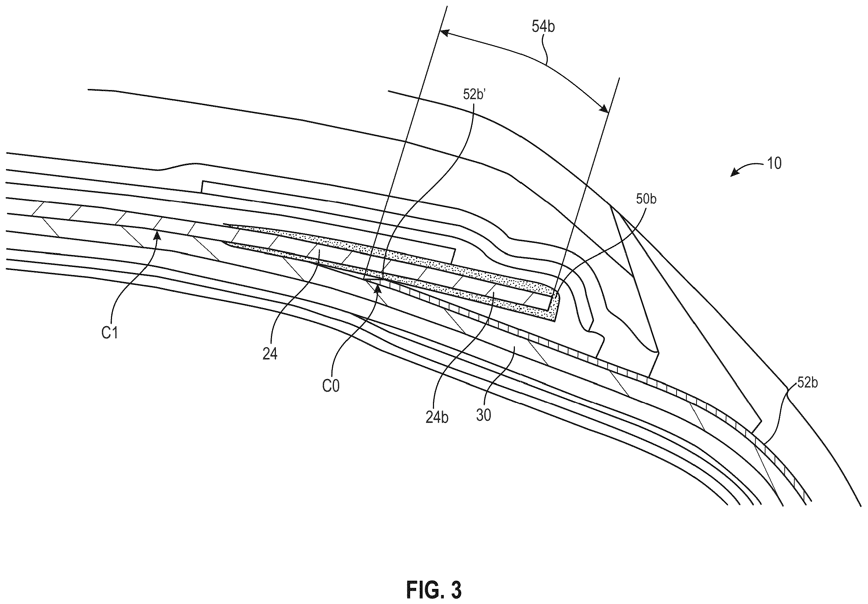

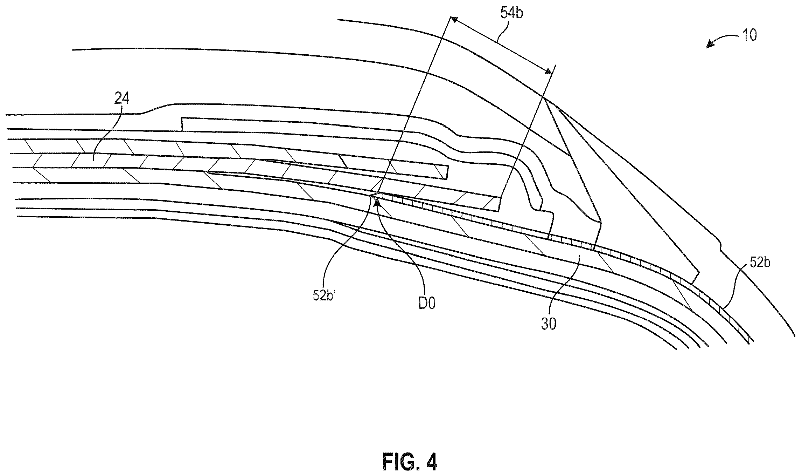

As illustrated, each wedge 40a, 40b extends axially outward past a respective lateral edge 24a', 24b' of the first belt 24 to be between the respective lateral end portion 12a, 12b of the tread cap 12 and the first ply 30. In alternative embodiments to FIG. 1, a tire 10 may not include the pair of wedges 40a, 40b (see, e.g., FIGS. 3 and 4). All other disclosure related to FIG. 1 would be applicable to this alternative embodiment.

The tire 10 preferably further comprises a pair of wraparound gum layers 50a, 50b and a pair of sidewall gum layers 52a, 52b. Each of the wraparound gum layers 50a, 50b wraps around a respective lateral end portion 24a, 24b of the first belt 24 (the radially innermost belt). Each wraparound gum layer 50a, 50b extends along an outer surface of the first belt 24 (the radially innermost belt), wraps around a respective end of the first belt 24, and extends along an inner surface of the first belt 24. That is, a first wraparound gum layer 50a wraps around a first lateral end portion 24a of the first belt 24 (the radially innermost belt), a second wraparound gum layer 50b wraps around a second lateral end portion 24b of the first belt 24 (the radially innermost belt).

Each wraparound gum layer 50a, 50b preferably extends along the inner and outer surfaces of the first belt 24 (the radially innermost belt), cumulatively, for 10 mm to 30 mm (or 15 mm to 25 mm). The length that each wraparound gum layer 50a, 50b extends along the inner and outer surfaces of the first belt 24 may be different or the same.

In alternate embodiments to FIG. 1, the tire 10 may further comprise one or more additional pairs of wraparound gum layers that each wrap around a lateral end portion of other belts in the belt structure 14. For example, the tire 10 may further comprise a second pair of wraparound gum layers where each wraparound gum layer wraps around a lateral end portion of second belt 26. If a third belt is included in the belt structure, a pair of wraparound gum layers is associated with the radially innermost belt, and, if additional pair(s) of wraparound gum layers are include in the tire, a pair of wraparound gum layers may be associated with one or both of the other two belts. The disclosure relating to the dimensions, composition, and location for the wraparound gum layer 50a, 50b of FIG. 1 apply to any of the one or more additional pairs of wraparound gum layers relative to the belt to which said additional pair(s) of wraparound gum layers is associated. In other alternative embodiments to FIG. 1, a tire 10 may not include any wraparound gum layers 50a, 50b (see, e.g., FIG. 4). All other disclosure related to FIG. 1 would be applicable to this alternative embodiment.

Each of the sidewall gum layers 52a, 52b extends along an outer surface of the first ply 30 (the radially outermost ply) of the carcass 22 from a first end 52a', 52b' to a second end 52a", 52b". Inner surfaces of the sidewall gum layers 52a, 52b are in contact with the first ply 30 preferably along an entire length of the sidewall gum layers 52a, 52b. The first end 52a', 52b' is located axially inward of the corresponding lateral edge 24a', 24b' of the first belt 24 and radially between the first ply 30 (the radially outermost ply) and the respective lateral end portion 24a,24b of the first belt 24 (the radially innermost belt). Each of the sidewall gum layers 52a, 52b laterally overlaps the first belt 24 (the radially innermost belt) to define a laterally overlapping region 54a, 54b. In some embodiments, the laterally overlapping regions 54a, 54b extending for a length of at least 6 mm each. The second end 52a", 52b" is located at or within the respective bead region 20a, 20b. That is, a first sidewall gum layer 52a extends along an outer surface of the first ply 30 (the radially outermost ply) from a first end 52a' between the first ply 30 and the first lateral end portion 24a of the first belt 24 (the radially innermost belt) to a second end 52a" at a first bead region 20a wrapped by at least the second ply 32, and a second sidewall gum layer 52b extends along an outer surface of the first ply 30 from a first end 52b' between the first ply 30 and the second lateral end portion 24b of the first belt 24 to a second end 52b" at a second bead region 20b wrapped by at least the second ply 32.

Portions of each sidewall gum layer 52a, 52b are located between and contacting the first ply 30 and (a) the wedge 40a, 40b at or near the first end 52a', 52b', (b) the sidewall 16, 18, (c) the turned up ends 32a, 32b of the second ply 32 (the most radially inward ply), and (d) the bead filler apex 38a, 38b at or near the second end 52a", 52b".

As illustrated in FIG. 1, the second end 52a" of the sidewall gum layer 52a is disposed at a location designated by A0. The second end 52a" is located between and in contact with both the first ply 30 and the bead filler apex 38a on an axially inward side of the bead filler apex 52a". In other embodiments, the sidewall gum layer 52a may extend a greater or lesser distance within the bead region 20a. For example, the sidewall gum layer 52a may extend to location A1 such that the second end 52a" is located between and in contact with the first ply 30 and the bead core 36a. Similarly, the sidewall gum layer 52a may extend to location A2 such that the second end 52a" is located between and in contact with the first ply 30 and the turned up end 32a of the second ply 32. The sidewall gum layer 52b may be similarly arranged with respect to the corresponding bead region 20b.

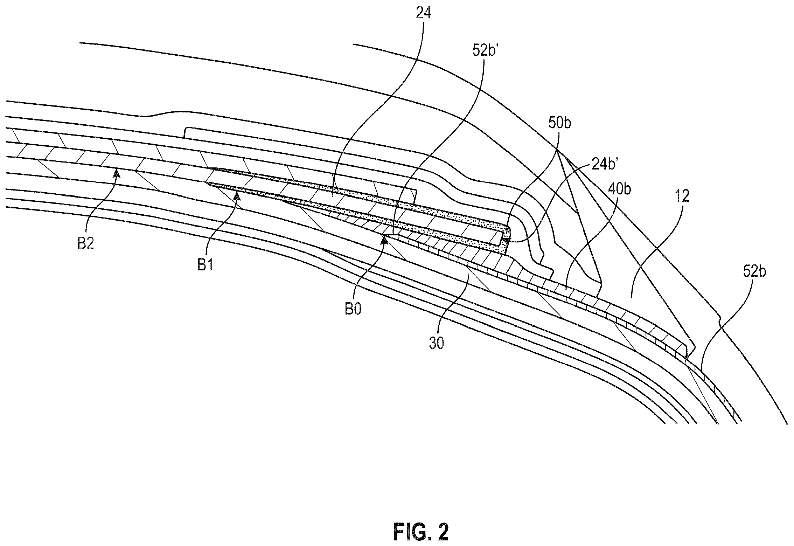

As illustrated in FIG. 2, the first end 52b' of the sidewall gum layer 52b is disposed at a location B0, which is radially between and in contact with the first ply 30 and the wedge 40b. In alternative embodiments to FIG. 2, the sidewall gum layers 52b may extend further along the first ply 30 to locations more axially inward from the lateral edge 24b' of the first belt 24. For example, the sidewall gum layer 52b may extend beyond the wedge 40b to a location B1, which is radially between and in contact with the first ply 30 and wraparound gum layer 50b. Similarly, the sidewall gum layer 52b may extend beyond the wraparound gum layer 50b to a location B2, which is radially between and in contact with the first ply 30 and the first belt 24. The sidewall gum layer 52a (FIG. 1) may be similarly arranged with respect to the first belt 24. In embodiments where the sidewall gum layers 52a, 52b extend axially inward from the wedges 40a, 40b, portions of each sidewall gum layer 52a, 52b can be located between and contacting the first ply 30 and (a) the wraparound gum layers 50a, 50b and/or the first belt 24 (the radially innermost belt), (b) the wedge 40a, 40b at or near the first end 52a', 52b', (c) the sidewall 16, 18, (d) the turned up ends 32a, 32b of the second ply 32 (the most radially inward ply), (e) the bead filler apex 38a, 38b at or near the second end 52a", 52b" and (f) the bead core 36a, 36b at or near the second end 52a", 52b".

In other alternative embodiments, the tire 10 may not include the pair of wedges 40a, 40b as illustrated in FIG. 3. In these embodiments, the first end 52b' of the sidewall gum layer 52b is disposed at a location C0, which is radially between and in contact with the first ply 30 and the wraparound gum layer 50b. The sidewall gum layer 52b may support the lateral end portion 24b and assist in maintaining a predetermined curvature of the first belt 24 in a manner similar to the wedge 40b (FIG. 2) described above. A length of the laterally overlapping region 54b may be adjusted to adjust the curvature of the first belt 24. For example, the sidewall gum layer 50b may extend axially to a location C1, which is radially between and in contact with the first ply 30 and the first belt 24. Since the sidewall gum layer 52b may function as a wedge 40b to maintain a predetermined curvature of the first belt 24, the wedge 40b to be removed from some designs. Removing the wedge 40b may lower costs and simplify the manufacturing process. The sidewall gum layer 52a (FIG. 1) may be similarly arranged with respect to the first belt 24. In embodiments where no wedge 24 is provided, portions of each sidewall gum layer 52a, 52b can be located between and contacting the first ply 30 and (a) the wraparound gum layers 50a, 50b and/or the first belt 24 (the radially innermost belt), (b) the sidewall 16, 18, (c) the turned up ends 32a, 32b of the second ply 32 (the most radially inward ply), (d) the bead filler apex 38a, 38b at or near the second end 52a", 52b", and (e) the bead core 36a, 36b at or near the second end 52a", 52b".

Referring to FIG. 4, in other alternative embodiments, the tire 10 may not include the wraparound gum layers 50a, 50b (FIG. 2). In these embodiments, the first end 52b' of the sidewall gum layer 52b is preferably disposed at a location D0, which is radially between and in contact with the first ply 30 and the first belt 24. Laterally overlapping region 54b is defined between the first end 52b' of the sidewall gum layer 52b and the lateral edge 24b' of the first belt 24. The sidewall gum layer 52a (FIG. 1) may be similarly arranged with respect to the first belt 24.

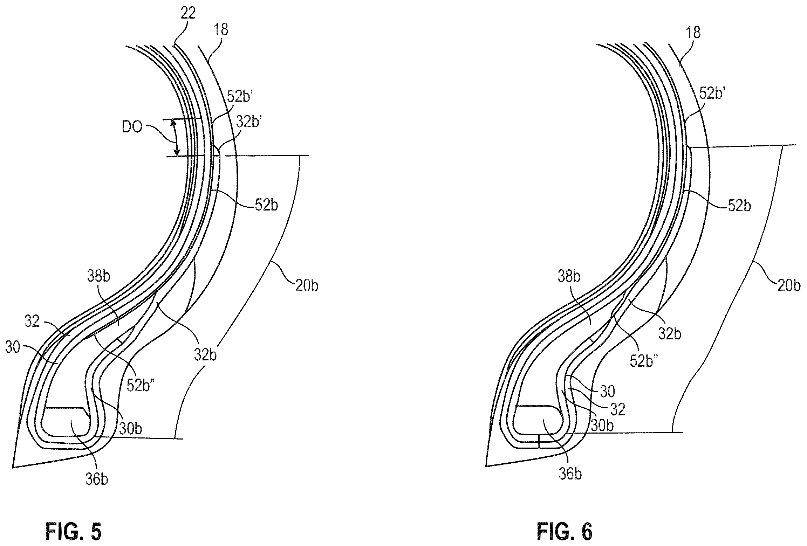

Referring to FIG. 5, the sidewall gum layer 52b and bead region 20b of FIG. 1 are illustrated in greater detail. The bead region 20b is wrapped by the carcass 22 and includes bead core 36b therein. As illustrated in FIG. 5, the bead region 20b also includes the optional bead filler apex 38b and a portion of the sidewall gum layer 52b that is wrapped by the carcass 22. The bead region 20b is bounded laterally by the first and second plies 30, 32 on a laterally inner side thereof and by the turned up ends 30b, 32b on a laterally outer side thereof. The bead region 20b is bounded radially by a radially innermost edge of the annular bead core 36b and a radially outermost end point 32b' of the turned up ends 30b, 32b.

The sidewall gum layer 52b extends along the ply 30 from the first belt 24 (FIG. 2) across the end point 32b' and into the bead region 20b. Radially outwardly of the end point 32b', the sidewall gum layer 52b is laterally interposed between the carcass 22 and the sidewall 18 such that a laterally inner side of the sidewall gum layer 52b is contacted by the first ply 30 and a laterally outer side of the sidewall gum layer 52b is contacted by the sidewall 18. The second end 52b" of the sidewall gum layer 52b is disposed within the bead region 20b. A laterally inner side of the second end 52b" is contacted by the first ply 30 and a laterally outer side of the second end 52b" is contacted by the bead filler apex 38b.

Referring to FIGS. 6 through 8, in alternate embodiments, different configurations of the bead region 20b and the sidewall gum layer 52b are contemplated. As illustrated in FIG. 6, the sidewall gum layer 52b extends along a laterally outer side of the bead filler apex 38b such that the second end 52b" is contacted by the bead filler apex 38b and the turned up end 32b of the second ply 32. As illustrated in FIG. 7, the bead region 20b does not include a bead filler apex, and the carcass 22 wraps the bead core 36b and a portion of the sidewall gum layer 52b. The sidewall gum layer 52b extends to the bead core 36b such that the second end 52b" is contacted by the bead core 36b and the turned up end 30b. As illustrated in FIG. 8, the sidewall gum layer 52b extends to a point within the bead region 20b that is radially outward of the bead filler apex 38b. The second end 52b" is contacted by the first ply 30 on a laterally inner side thereof and by the turned up end 32b on a laterally outer side thereof. The second end 52b" is disposed radially outward of a radially innermost portion 18b of the sidewall 18. In any of the configurations illustrated in FIGS. 6 through 8, the sidewall gum layer 52 will absorb and dissipate energy and heat generated when the sidewall 18 flexes as described above.

The length of each sidewall gum layer 52a, 52b may be 50 mm to 90 mm (or 55 mm to 75 mm).

The gum layers (e.g., the wraparound gum layers 50a, 50b and the sidewall gum layers 52a, 52b) used in the construction of the tires described herein can be formed of a rubber and/or elastomer. Preferably, the rubber and/or the elastomer of the gum layer has a Shore A hardness between 80 and 95, tested according to ASTM S2240-15(2021) and preferably with a cure of 18 minutes at 150°C. Further, the rubber and/or the elastomer of the gum layer preferably has a RPA G' 1 percent of 4 MPa or greater. In accordance with the invention, each of the sidewall gum layers 52a, 52b is constructed a rubber and/or an elastomer having a RPA G' 1 percent of 4 MPa or greater. As used herein, the term "RPA" means rubber processing analyzer analytical equipment as produced by the Monsanto Company, and referred to as "RPA 2000." The term "RPA G' 1 percent" refers to the dynamic storage modulus "G'" at a one (1) percent strain (elongation) as determined by the RPA 2000 analytical equipment measured at 100°C.

The gum layers preferably have a thickness of 0.2 mm to 2 mm (or 0.2 mm to 1 mm, or 0.5 mm to 1.5 mm, or 1 mm to 2 mm). Each gum layer preferably may have the same or a different thickness from each other.

The rubber that at least partially forms parts of the tire like the innerliner, carcasses (including the carcass plies), belt structures, and tread portions may comprise a rubber. Specific examples of suitable rubbers include neoprene (polychloroprene), polybutadiene (including cis-1,4-polybutadiene), polyisoprene (including cis-1,4-polyisoprene) (natural or synthetic), butyl rubber, halobutyl rubber (including chlorobutyl rubber or bromobutyl rubber), styrene/isoprene/butadiene rubber, copolymers of 1,3-butadiene or isoprene with monomers such as styrene, acrylonitrile and methyl methacrylate, ethylene/propylene terpolymers (also known as ethylene/propylene/diene monomer (EPDM) terpolymers (e.g., ethylene/propylene/dicyclopentadiene terpolymers)), alkoxy-silyl end functionalized solution polymerized polymers, styrene-butadiene rubber, polybutadiene rubber, isoprene butadiene rubber, styrene isoprene butadiene rubber, the like, and any combination thereof. The foregoing rubbers may also include conventional rubber compounding ingredients including processing oil, accelerators, conventional sulfur curing agents, pigments, carbon black, zinc oxide, stearic acid, tackifying resin, plasticizer, the like, and any combination thereof.

The production of the tires of the present invention may include assembling the tire components followed by curing according to production methods conventionally known in the art, which may be dependent on the type of tire. For example, US Patent No. 10,960,627 describes methods for producing tires. Generally, gum layers typically come in a roll (e.g., 1 cm to 20 cm wide). One skilled in the art, with the benefit of this invention, will recognize how to apply the gum layers to achieve the various embodiments of tires described herein.

To facilitate a better understanding of the embodiments of the present invention, the following examples of preferred or representative embodiments are given.

### EXAMPLES

Gum layers of 0.5 mm to 0.6 mm thickness were used in the construction of seven different vehicle tire configurations, each corresponding to the construction of FIG. 1. Under high-load testing, the durability of the tire was improved with only a minor increase ( 1% to 2%) in rolling resistance as compared to said configurations without the sidewall gum layers.

## Claims

1. A tire comprising:
first and second annular bead cores (36a, 36b) axially spaced from one another;
a carcass (22) including at least one ply (30) wrapped around the first and second bead cores (36a, 36b), said ply (30) or each ply of the at least one ply (30) defining a pair of turned up ends (30a, 30b) extending to radially outer end points (30a', 30b') of the respective ply (30);
first and second bead regions (20a, 20b) wrapped by the at least one ply (30) such that the first and second bead regions (20a, 20b) are bounded laterally by the at least one ply (30) and the turned up ends (30a, 30b), and bounded radially by radially innermost edges of respective annular bead cores (30a, 36b) and the radially outer end points (30a', 30b') of respective turned up ends (30a, 30b);
a belt structure (14) disposed radially outward of the carcass (22), the belt structure (14) including a radially innermost belt (24) having first and second lateral end portions (24a, 24b) terminating in respective first and second lateral edges (24a', 24b') of the radially innermost belt (24) respectively; and
first and second sidewall gum layers (52a, 52b) each extending along a surface of the at least one ply (30) from a first end (52a', 52b') to a second end (52a", 52b"), the first end (52a', 52b') being disposed axially inward of a respective lateral edge (24a', 24b') of the radially innermost belt (24) and preferably radially between the at least one ply (30) and a respective lateral end portion (24a, 24b) of the radially innermost belt (24), and the second end (52a", 52b") being disposed within a respective bead region (20a, 20b) of the first and second bead regions (20a, 20b),
**characterized in that** each of the sidewall gum layers (52a, 52b) is constructed of a rubber and/or an elastomer having a dynamic storage modulus G' at a 1 percent strain as determined by a rubber processing analyzer analytical equipment measured at 100°C of 4 MPa or greater.

2. The tire of claim 1, wherein each of the sidewall gum layers (52a, 52b) is constructed of a rubber and/or an elastomer having a Shore A hardness between 80 and 95.

3. The tire of claim 1 or 2, wherein each of the sidewall gum layers (52a, 52b) has a length within a range from 50 mm to 90 mm and/or a thickness within a range of from 0.2 mm to 2 mm.

4. The tire of at least one of the previous claims, further comprising a pair of wedges (40a, 40b), wherein a first wedge (40a) of the pair of wedges is disposed, at least partially, axially inward of the lateral edge (24a') of the first lateral end portion (24a) of the radially innermost belt (24) and radially between the first lateral end portion (24a) and the at least one ply (30), wherein a second wedge (40b) of the pair of wedges is disposed, at least partially, axially inward of the lateral edge (24b') of the second lateral end portion (24b) of the radially innermost belt (24) and radially between the second lateral end portion (24b) and the at least one ply (30), and, optionally, wherein the first end (52a', 52b') of each of the sidewall gum layers (52a, 52b) is disposed radially between, and in contact with, the at least one ply (30) and a corresponding wedge of the pair of wedges (40a, 40b).

5. The tire of at least one of the previous claims, further comprising first and second wraparound gum layers (50a, 50b), wherein the first wraparound gum layer (50a) wraps around the first lateral end portion (24a) of the radially innermost belt (24), wherein the second wraparound gum layer (50b) wraps around the second lateral end portion (24b) of the radially innermost belt (24), and wherein the first end (52a', 52b') of each of the sidewall gum layers (52a, 52b) is disposed radially between and contacting the at least one ply (30) and a corresponding one of first and second of wraparound gum layers (50a, 50b).

6. The tire of at least one of the previous claims, wherein the first end (52a', 52b') of each of the sidewall gum layers (52a, 52b) is radially between and contacting the at least one ply (30) and the corresponding first or second lateral end portion (24a, 24b) of the radially innermost belt (24).

7. The tire of at least one of the previous claims, wherein each of the wraparound gum layers (50a, 50b) extends along an inner surface and an outer surface of the radially innermost belt for a cumulative distance in a range of 10 mm to 50 mm, preferably 10 to 30 mm, and/or wherein each of the wraparound gum layers (50a, 50b) extends along an inner surface of the radially innermost belt (24) over a first distance of from 5 to 25 mm, preferably 5 to 15 mm, and along an outer surface of the radially innermost belt (24) over a second distance of from 5 to 25 mm, preferably 5 to 15 mm, the first and second distance being preferably the same or being preferably not more than 5 mm different.

8. The tire of at least one of the previous claims, wherein the pair of wraparound gum layers (50a, 50b) is a first pair of wraparound gum layers, wherein the belt structure (14) further comprises a second belt (26), and wherein the tire (10) further comprises a second pair of wraparound gum layers that wrap around lateral end portions of the second belt (26).

9. The tire of at least one of the previous claims, wherein the first bead region (20a) further comprises a first bead filler apex (38a) disposed radially outward of the first annular bead core (36a), wherein the second bead region (20b) further comprises a second bead filler apex (38b) disposed radially outward of the second annular bead core (36b), and wherein the second end (52a", 52b") of each of the sidewall gum layers (52a, 52b) contacts a corresponding one of the first and second bead filler apexes (38a, 38b) or extends over a portion of a surface of a corresponding one of the first and second bead filler apexes (38a, 38b).

10. The tire of at least one of the previous claims, wherein the tire is a pneumatic tire and comprises a tread cap layer (12), said belt structure (14) being interposed between the carcass (22) and the tread cap layer (12), and wherein the tire (10) further comprises a pair of sidewall portions (16, 18) with radially outermost portions (16a, 18a) of each sidewall portion (16, 18) overlie lateral end portions (12a, 12b) of the tread cap layer (12).

11. The tire of claim 10, further comprising a pair of wedges (40a, 40b), wherein an axially inner end of each wedge (40a, 40b) is disposed radially between the radially innermost belt (24) and the at least one ply (30) and wherein an axially outer end of each wedge (40a, 40b) is disposed radially between and in contact with one of the lateral end portions of the tread cap layer (12a, 12b) and the at least one ply (30).

12. The tire of at least one of the previous claims, further comprising a pair wraparound gum layers (50a, 50b), wherein a first wraparound gum layer (50a) wraps around a first lateral end portion (24a) of the radially innermost belt (24), and wherein a second wraparound gum layer wraps (50b) around a second lateral end portion (24b) of said radially innermost belt (24), wherein the axially inner ends of each wedge (40a, 40b) are in contact with a corresponding wraparound gum layer (50a, 50b), and, optionally, wherein the first end (52a', 52b') of each of the sidewall gum layers (52a, 52b) is in contact with the at least one ply (30) and a corresponding wedge (40a, 40b).

## Patentansprüche

1. Reifen, der Folgendes umfasst:
einen ersten und einen zweiten ringförmigen Wulstkern (36a, 36b), die in der axialen Richtung voneinander beabstandet sind;
eine Karkasse (22), die mindestens eine Lage (30) enthält, die sich um den ersten und den zweiten Wulstkern (36a, 36b) wickelt; wobei die oben genannte Lage (30) oder jede Lage der mindestens einen Lage (30) ein Paar nach oben umgeschlagener Enden (30a, 30b) definiert, die sich bis zu in der radialen Richtung äußeren Endpunkten (30a', 30b') der jeweiligen Lage (30) erstrecken;
einen ersten und einen zweiten Wulstbereich (20a, 20b), um die sich die mindestens eine Lage (30) derart wickelt, dass der erste und der zweite Wulstbereich (20a, 20b) in der seitlichen Richtung durch die mindestens eine Lage (30) und durch die nach oben umgeschlagenen Enden (30a, 30b) begrenzt werden; und in der radialen Richtung durch die in der radialen Richtung innersten Kanten der jeweiligen ringförmigen Wulstkerne (36a, 36b) sowie durch die in der radialen Richtung äußeren Endpunkte (30a', 30b') der jeweiligen nach oben umgeschlagenen Enden (30a, 30b) begrenzt werden;
eine Gürtelstruktur (14), die in der radialen Richtung außerhalb der Karkasse (22) angeordnet ist; wobei die Gürtelstruktur (14) einen in der radialen Richtung innersten Gürtel (24) aufweist, der einen ersten und einen zweiten seitlichen Endabschnitt (24a, 24b) aufweist, die jeweils in eine erste und eine zweite jeweilige seitliche Kante (24a', 24b') des in der radialen Richtung innersten Gürtels (24) enden; und
eine erste und eine zweite Gummischicht an den Seitenwänden (52a, 52b), die sich jeweils entlang einer Oberfläche der mindestens einen Lage (30) von einem ersten Ende (52a', 52b') bis zu einem zweiten Ende (52a", 52b") erstrecken; wobei das erste Ende (52a', 52b') in der axialen Richtung innerhalb von einer jeweiligen seitlichen Kante (24a', 24b') des innersten Gürtels (24) in der radialen Richtung und vorzugsweise in der radialen Richtung zwischen der mindestens einen Lage (30) und einem jeweiligen seitlichen Endabschnitt (24a, 24b) des in der radialen Richtung innersten Gürtels (24) angeordnet ist; und wobei das zweite Ende (52a", 52b") innerhalb eines jeweiligen Wulstbereichs (20a, 20b) des ersten und des zweiten Wulstbereichs (20a, 20b) angeordnet ist;
**dadurch gekennzeichnet, dass** jede der Gummischichten an den Seitenwänden (52a, 52b) aus einem Kautschuk und/oder einem Elastomer besteht, der bzw. das einen dynamischen Speichermodul G' bei einer Verformung von 1 Prozent aufweist, wie er durch ein analytisches Gerät zur Prozessanalyse für Kautschuk bestimmt wird, wobei die Messung bei einer Temperatur von 100 °C unter einem Druck von 4 MPa oder mehr ausgeführt wird.

2. Reifen nach Anspruch 1, wobei jede der Gummischichten an den Seitenwänden (52a, 52b) aus einem Kautschuk und/oder einem Elastomer besteht, das bzw. die eine Shore-A-Härte zwischen 80 und 95 aufweisen.

3. Reifen nach Anspruch 1 oder 2, wobei jede der Gummischichten an den Seitenwänden (52a, 52b) eine Länge in dem Bereich von 50 mm bis 90 mm und/oder eine Dicke in dem Bereich von 0,2 mm bis 2 mm aufweist.

4. Reifen nach mindestens einem der vorstehenden Ansprüche, die ferner ein Paar von Feststellkeilen (40a, 40b) umfassen; wobei ein erster Feststellkeil (40a) des Paares von Feststellkeilen mindestens teilweise in der axialen Richtung innerhalb von der seitlichen Kante (24a') des ersten seitlichen Endabschnitts (24a) des innersten Gürtels (24) und in der radialen Richtung zwischen dem ersten seitlichen Endabschnitt (24a) und der mindestens einen Lage (30) angeordnet ist; wobei ein zweiter Feststellkeil (40b) des Paares von Feststellkeilen mindestens teilweise in der axialen Richtung innerhalb von der seitlichen Kante (24b') des zweiten seitlichen Endabschnitts (24b) des in der radialen Richtung innersten Gürtels (24) und in der radialen Richtung zwischen dem zweiten seitlichen Endabschnitt (24b) und der mindestens einen Lage (30) angeordnet ist; und wobei optional das erste Ende (52a', 52b') jeder der Gummischichten an den Seitenwänden (52a, 52b) in der radialen Richtung zwischen der mindestens einen Lage (30) und einem entsprechenden Feststellkeil des Paares von Feststellkeilen (40a, 40b) angeordnet ist, und mit der oben genannten Lage und dem oben genannten Feststellkeil in Kontakt steht.

5. Reifen nach mindestens einem der vorstehenden Ansprüche, der ferner eine erste und eine zweite Wickelgummischicht (50a, 50b) umfasst; wobei die erste Wickelgummischicht (50a) den ersten seitlichen Endabschnitt (24a) der in der radialen Richtung innersten Gürtelschicht (24) umwickelt; wobei die zweite Wickelgummischicht (50b) den zweiten seitlichen Endabschnitt (24b) der in der radialen Richtung innersten Gürtelschicht (24) umwickelt; und wobei das erste Ende (52a', 52b') jeder der Gummischichten an den Seitenwänden (52a, 52b) in der radialen Richtung zwischen der mindestens einen Lage (30) und einer entsprechenden Schicht der ersten und der zweiten Wickelgummischicht (50a, 50b) angeordnet ist; und mit der oben genannten Schicht und der oben genannten zweiten Wickelgummischicht in Kontakt steht.

6. Reifen nach mindestens einem der vorstehenden Ansprüche, wobei das erste Ende (52a', 52b') jeder der Gummischichten an den Seitenwänden (52a, 52b) in der radialen Richtung zwischen der mindestens einen Lage (30) und dem entsprechenden ersten oder zweiten seitlichen Endabschnitt (24a, 24b) des in der radialen Richtung innersten Gürtels (24) angeordnet ist; und mit der oben genannten mindestens einen Lage (30) und dem oben genannten ersten oder zweiten seitlichen Endabschnitt in Kontakt steht.

7. Reifen nach mindestens einem der vorstehenden Ansprüche, wobei jede der Wickelgummischichten (50a, 50b) sich entlang einer inneren Oberfläche und einer äußeren Oberfläche des in der radialen Richtung innersten Gürtels über eine kumulative Strecke erstreckt, die in dem Bereich von 10 mm bis 50 mm, vorzugsweise von 10 mm bis 30 mm, liegt; und/oder wobei jede der Wickelgummischichten (50a, 50b) sich entlang einer inneren Oberfläche des in der radialen Richtung innersten Gürtels (24) über eine erste Strecke erstreckt, die in dem Bereich von 5 mm bis 25 mm, vorzugsweise von 5 mm bis 15 mm liegt; und entlang einer äußeren Oberfläche des in der radialen Richtung innersten Gürtels (24) über eine zweite Strecke, die in dem Bereich von 5 mm bis 25 mm, vorzugsweise von 5 mm bis 15 mm, liegt; wobei die erste und die zweite Strecke vorzugsweise identisch sind oder vorzugsweise sich um höchstens 5 mm unterscheiden.

8. Reifen nach mindestens einem der vorstehenden Ansprüche, wobei das Paar von Wickelgummischichten (50a, 50b) ein erstes Paar von Wickelgummischichten darstellt; wobei die Gürtelstruktur (14) ferner einen zweiten Gürtel (26) umfasst; und wobei der Reifen (10) ferner ein zweites Paar von Wickelgummischichten umfasst, das sich um seitliche Endabschnitte des zweiten Gürtels (26) wickelt.

9. Reifen gemäß mindestens einem der vorstehenden Ansprüche, wobei der erste Wulstbereich (20a) ferner einen ersten Kernreiter (38a) umfasst, der in der radialen Richtung außerhalb des ersten ringförmigen Wulstkerns (36a) angeordnet ist; wobei der zweite Wulstbereich (20b) ferner einen zweiten Kernreiter (38b) umfasst, der in der radialen Richtung außerhalb des zweiten ringförmigen Wulstkerns (36b) angeordnet ist; und wobei das zweite Ende (52a", 52b") jeder der Gummischichten an den Seitenwänden (52a, 52b) mit einem entsprechenden Kernreiter des oben genannten ersten und des oben genannten zweiten Kernreiters (38a, 38b) in Kontakt steht oder sich über einen Abschnitt einer Oberfläche eines entsprechenden Kernreiters des oben genannten ersten und des oben genannten zweiten Kernreiters (38a, 38b) erstreckt.

10. Reifen nach mindestens einem der vorstehenden Ansprüche, wobei es sich bei dem Reifen um einen Luftreifen handelt und dieser einen Laufstreifen (12) umfasst; wobei die oben genannte Gürtelstruktur (14) zwischen der Karkasse (22) und dem Laufstreifen (12) angeordnet ist; und wobei der Reifen (10) ferner ein Paar von Abschnitten in Form einer Seitenwand (16, 18) umfasst; wobei in der radialen Richtung äußerste Abschnitte (16a, 18a) jedes Abschnitts in Form einer Seitenwand (16, 18) seitliche Endabschnitte (12a, 12b) des Laufstreifens (12) überdecken.

11. Reifen nach Anspruch 10, der ferner ein in axialer Richtung äußeres Ende jedes Feststellkeils (40a, 40b) umfasst, das in der radialen Richtung zwischen dem in der radialen Richtung innersten Gürtel (24) und der mindestens einen Lage (30) angeordnet ist; und wobei ein in axialer Richtung äußeres Ende jedes Feststellkeils (40a, 40b) in der radialen Richtung zwischen einem der seitlichen Endabschnitte des Laufstreifens (12a, 12b) und der mindestens einen Lage (30) angeordnet ist, und mit den oben genannten seitlichen Endabschnitten und mit der oben genannten mindestens einen Lage in Kontakt steht.

12. Reifen nach mindestens einem der vorstehenden Ansprüche, der ferner ein Paar Wickelgummischichten (50a, 50b) umfasst; wobei eine erste Wickelgummischicht (50a) um einen ersten seitlichen Endabschnitt (24a) des in der radialen Richtung innersten Gürtels (24) wickelt; und wobei eine zweite Wickelgummischicht (50b) um einen zweiten seitlichen Endabschnitt (24b) des oben genannten in der radialen Richtung innersten Gürtels (24) wickelt; wobei das in der axialen Richtung innere Ende jedes Feststellkeils (40a, 40b) mit einer entsprechenden Wickelgummischicht (50a, 50b) in Kontakt; und wobei optional das erste Ende (52a', 52b') jeder der Gummischichten an den Seitenwänden (52a, 52b) mit der mindestens einen Lage (30) und mit einem entsprechenden Feststellkeil (40a, 40b) in Kontakt steht.

## Revendications

1. Bandage qui comprend :
une première et une deuxième tringle de talon annulaire (36a, 36b) espacées l'une de l'autre dans la direction axiale ;
une carcasse (22) qui englobe au moins une nappe (30) qui vient s'enrouler autour de la première et de la deuxième tringle de talon (36a, 36b) ; dans lequel ladite nappe (30) ou chaque nappe de ladite au moins une nappe (30) définit une paire d'extrémités (30a, 30b) retournées vers le haut qui s'étendent jusqu'à des points terminaux (30a', 30b'), externes dans la direction radiale, de la nappe respective (30) ;
une première et une deuxième zone du talon (20a, 20b) autour desquelles vient s'enrouler ladite au moins une nappe (30) d'une manière telle que la première et la deuxième zone du talon (20a, 20b) sont délimitées, dans la direction latérale, par ladite au moins une nappe (30) et par les extrémités (30a, 30b) retournées vers le haut, et sont délimitées dans la direction latérale par des bords les plus internes dans la direction radiale de tringles de talons annulaires respectives (36a, 36b) et par les points terminaux (30a', 30b'), externes dans la direction radiale, des extrémités respectives (30a, 30b) retournées vers le haut ;
une structure de ceintures (14) qui est disposée, dans la direction radiale, à l'extérieur de la carcasse (22) ; dans lequel la structure de ceintures (14) englobe une ceinture (24) la plus interne dans la direction radiale qui possède une première et une deuxième portion terminale latérale (24a, 24b) qui se terminent en un premier et un deuxième bords latéraux (24a', 24b') de la ceinture (24) la plus interne dans la direction radiale, respectivement ; et
une première et une deuxième couche de gomme de flanc (52a, 52b) qui s'étendent chacune le long d'une surface de ladite au moins une nappe (30) à partir d'une première extrémité (52a', 52b') jusqu'à une deuxième extrémité (52a", 52b"); dans lequel la première extrémité (52a', 52b') est disposée, dans la direction axiale, à l'intérieur d'un bord latéral respectif (24a', 24b') de la ceinture (24) la plus interne dans la direction radiale et, de préférence, dans la direction radiale, entre ladite au moins une nappe (30) et une portion terminale latérale respective (24a, 24b) de la ceinture (24) la plus interne dans la direction radiale ; et dans lequel la deuxième extrémité (52a", 52b") est disposée au sein d'une zone du talon respective (20a, 20b) de la première et de la deuxième zone du talon (20a, 20b) ;
**caractérisé en ce que** chacune des couches de gomme de flanc (52a, 52b) est constituée d'un caoutchouc et/ou d'un élastomère qui possède(nt) un module de conservation dynamique G' à une déformation de 1 pour cent, tel qu'il est déterminé par un équipement analytique d'analyse de process pour caoutchouc, la mesure étant réalisée à une température de 100 °C sous une pression de 4 MPa ou plus.

2. Bandage selon la revendication 1, dans lequel chacune des couches de gomme de flanc (52a, 52b) est constituée d'un caoutchouc et/ou d'un élastomère qui possède(nt) une dureté Shore A entre 80 et 95.

3. Bandage selon la revendication 1 ou 2, dans lequel chacune des couches de gomme de flanc (52a, 52b) possède une longueur qui se situe au sein d'une plage allant de 50 mm à 90 mm et/ou une épaisseur qui se situe au sein d'une plage allant de 0,2 mm à 2 mm.

4. Bandage selon au moins une des revendications précédentes, qui comprend en outre une paire de bandes de calage (40a, 40b) ; dans lequel une première bande de calage (40a) de la paire de bandes de calage est disposée, au moins en partie, dans la direction axiale, à l'intérieur du bord latéral (24a') de la première portion terminale latérale (24a) de la ceinture (24) la plus interne dans la direction radiale et, dans la direction radiale, entre la première portion terminale latérale (24a) et ladite au moins une nappe (30) ; dans lequel une deuxième bande de calage (40b) de la paire de bandes de calage est disposée, au moins en partie, dans la direction axiale, à l'intérieur du bord latéral (24b') de la deuxième portion terminale latérale (24b) de la ceinture (24) la plus interne dans la direction radiale et, dans la direction radiale, entre la deuxième portion terminale latérale (24b) et ladite au moins une nappe (30) ; et, de manière facultative, dans lequel la première extrémité (52a', 52b') de chacune des couches de gomme de flanc (52a, 52b) est disposée, dans la direction radiale, entre ladite au moins une nappe (30) et une bande de calage correspondante de la paire de bandes de calage (40a, 40b), et est mise en contact avec ladite nappe et avec ladite bande de calage.

5. Bandage selon au moins une des revendications précédentes, qui comprend en outre une première et deuxième couche de gomme d'enroulement (50a, 50b) ; dans lequel la première couche de gomme d'enroulement (50a) vient s'enrouler autour de la première portion terminale latérale (24a) de la ceinture (24) la plus interne dans la direction radiale ; dans lequel la deuxième couche de gomme d'enroulement (50b) vient s'enrouler autour de la deuxième portion terminale latérale (24a) de la ceinture (24) la plus interne dans la direction radiale ; et dans lequel la première extrémité (52a', 52b') de chacune des couches de gomme de flanc (52a, 52b) est disposée, dans la direction radiale, entre ladite au moins une nappe (30) et une couche correspondante de la première et de la deuxième couche de gomme d'enroulement (50a, 50b) et est mise en contact avec ladite nappe et avec ladite couche correspondante.

6. Bandage selon au moins une des revendications précédentes, dans lequel la première extrémité (52a', 52b') de chacune des couches de gomme de flanc (52a, 52b) est disposée, dans la direction radiale, entre ladite au moins une nappe (30) et la première ou la deuxième portion terminale latérale correspondante (24a, 24b) de la ceinture (24) la plus interne dans la direction radiale et est mise en contact avec ladite nappe et avec ladite portion terminale latérale.

7. Bandage selon au moins une des revendications précédentes, dans lequel chacune des couches de gomme d'enroulement (50a, 50b) s'étend le long d'une surface interne et d'une surface externe de la ceinture la plus interne dans la direction radiale sur une distance cumulative qui se situe au sein d'une plage allant de 10 mm à 50 mm, de préférence de 10 mm à 30 mm ; et/ou dans lequel chacune des couches de gomme d'enroulement (50a, 50b) s'étend le long d'une surface interne de la ceinture (24) la plus interne dans la direction radiale sur une première distance allant de 5 mm à 25 mm, de préférence de 5 mm à 15 mm et le long d'une surface externe de la ceinture (24) la plus interne dans la direction radiale sur une deuxième distance allant de 5 mm à 25 mm, de préférence de 5 mm à 15 mm ; dans lequel la première et la deuxième distance sont de préférence identiques ou ne sont différentes, de préférence, qu'à raison de 5 mm au maximum.

8. Bandage selon au moins une des revendications précédentes, dans lequel la paire de couches de gomme d'enroulement (50a, 50b) représente une première paire de couches de gomme d'enroulement ; dans lequel la structure de ceintures (14) comprend en outre une deuxième ceinture (26) ; et dans lequel le bandage (10) comprend en outre une deuxième paire de couches de gomme d'enroulement qui vient s'enrouler autour de portions terminales latérales de la deuxième ceinture (26).

9. Bandage selon au moins une des revendications précédentes, dans lequel la première zone du talon (20a) comprend en outre un premier bourrage de tringle (38a) qui est disposé, dans la direction radiale, à l'extérieur de la première tringle de talon annulaire (36a) ; dans lequel la deuxième zone du talon (20b) comprend en outre un deuxième bourrage de tringle (38b) qui est disposé, dans la direction radiale, à l'extérieur de la deuxième tringle de talon annulaire (36b) ; et dans lequel la deuxième extrémité (52a", 52b") de chacune des couches de gomme de flanc (52a, 52b) est mise en contact avec un bourrage de tringle correspondant dudit premier et dudit deuxième bourrage de tringle (38a, 38b) ou s'étend sur une portion d'une surface d'un bourrage de tringle correspondant dudit premier et dudit deuxième bourrage de tringle (38a, 38b).

10. Bandage selon au moins une des revendications précédentes, dans lequel le bandage est un bandage pneumatique et comprend une nappe de sommet (12) ; dans lequel ladite structure de ceintures (14) est intercalée entre la carcasse (22) et la nappe de sommet (12) ; et dans lequel le bandage (10) comprend en outre une paire de portions de flancs (16, 18) ; dans lequel des portions (16a, 18a) de chaque portion de flanc (16, 18), les plus externes dans la direction radiale, recouvre des portions terminales latérales (12a, 12b) de la nappe de sommet (12).

11. Bandage selon la revendication 10, dans lequel une extrémité, externe dans la direction axiale, de chaque bande de calage (40a, 40b) est disposée, dans la direction radiale, entre la ceinture (24) la plus interne dans la direction radiale et ladite au moins une nappe (30) ; et dans lequel une extrémité, externe dans la direction axiale, de chaque bande de calage (40a, 40b) est disposée, dans la direction radiale, entre une des portions terminales latérales de la nappe de sommet (12a, 12b) et ladite au moins une nappe (30), et est mise en contact avec ladite portion terminale latérale et avec ladite nappe.

12. Bandage selon au moins une des revendications précédentes, qui comprend en outre une paire de couches de gomme d'enroulement (50a, 50b) ; dans lequel une première couche de gomme d'enroulement (50a) vient s'enrouler autour d'une première portion terminale latérale (24a) de la ceinture (24) la plus interne dans la direction radiale ; et dans lequel une deuxième couche de gomme d'enroulement (50b) vient s'enrouler autour d'une deuxième portion terminale latérale (24b) de ladite ceinture (24) la plus interne dans la direction radiale ; dans lequel les extrémités de chaque bande de calage (40a, 40b), internes dans la direction axiale, sont mises en contact avec une couche de gomme d'enroulement correspondante (50a, 50b) ; et, de manière facultative, dans lequel la première extrémité (52a', 52b') de chacune des couches de gomme de flanc (52a, 52b) est mise en contact avec ladite au moins une nappe (30) et avec une bande de calage correspondante (40a, 40b).
